# EUROPEAN PATENT APPLICATION

(11) **EP 3 006 881 A1**
(43) Date of publication of application: **13.04.2016**
(21) Application number: 15188779.1
(22) Date of filing: 07.10.2015
(51) Int. Cl.: F28D 15/02

(54) **METHODS OF MANUFACTURING A COMPLEX HEAT PIPE AND A HEAT TRANSFER PLATE INCLUDING AN OPENING THEREFOR**

(30) Priority: 08.10.2014 US 201462061424 P; 01.10.2015 US 201514872498
(71) Applicant: Mersen Canada Toronto Inc., Mississauga, Ontario L5T 1Y9 (CA)
(72) Inventor: WEASNER, Clifford, Ontario, L3B 5N4 (CA)
(74) Representative: Tischner, Oliver

(57) **Abstract**

A method of manufacturing a complex heat pipe (10) includes joining a pipe (11) to a circumference of a hole (18) of a closed chamber (12), positioning the closed chamber (12) within a fixture (30) after the joining, and expanding deformed walls (13) of the closed chamber (12) to conform to walls (34,49) of the fixture (30) that correspond with the deformed closed chamber walls (13).

## Description

### RELATED APPLICATIONS

This application claims the benefit of U.S. Provisional Application No. 62/061,424, filed October 10, 2014, which is fully incorporated herein by reference.

### FIELD OF THE INVENTION

The following description generally relates to methods of manufacturing complex heat pipes and heat transfer plates including openings for complex heat pipes.

### BACKGROUND OF THE INVENTION

A complex heat pipe includes a number of different heat pipes joined to a single closed chamber that acts as a reservoir in high power dissipation heat sink designs. The heat pipe components can be brazed to each other to create the complex heat pipe. However, the brazing process exposes the closed chamber, which could be thin-walled copper, to high temperatures. The brazing may cause the closed chamber to become deformed. Failure to remedy the deformations in the closed chamber prior to soldering of the closed chamber into the heat transfer plate may result in poor physical contact between the opening of the heat transfer plate and the walls of the closed chamber. As a result, voids are more likely to occur between the walls of the closed chamber and the opening of the heat transfer plate. The voids act as insulators resulting in a higher temperature difference between two surfaces, thereby causing the heat transfer plate to perform poorly in the cooling of electronic components.

### SUMMARY OF THE INVENTION

Described herein are multiple example embodiments related to methods of manufacturing a complex heat pipe and methods of manufacturing a heat exchange plate including an opening for a complex heat pipe.

In a first aspect, a method of manufacturing a complex heat pipe includes joining a pipe to a circumference of a hole of a closed chamber, positioning the closed chamber within a fixture after the joining, and expanding deformed walls of the closed chamber to conform to walls of the fixture that correspond with the deformed closed chamber walls.

In an example of the first aspect, the closed chamber is positioned within the fixture such that a bottom surface of the closed chamber is flush with a bottom wall of the fixture.

In an additional example of the first aspect, the expanding includes injecting a fluid through an inlet of the pipe into the closed chamber until the deformed closed chamber walls expand to conform to the corresponding walls of the fixture.

In a further example of the first aspect, the positioning includes arranging the closed chamber between a stationary component of the fixture and a clamping component of the fixture. The stationary component and the clamping component define the walls of the fixture. The clamping component is movable to enclose and clamp the closed chamber within the fixture.

In still another example of the first aspect, the expanded closed chamber walls conform to walls of the stationary component and the clamping component of the fixture that define the corresponding walls of the fixture.

In an additional example of the first aspect, the deformed closed chamber walls include lengthwise opposite side walls. The corresponding walls of the fixture include lengthwise walls corresponding with the lengthwise side walls of the closed chamber. Prior to the expanding, each of the lengthwise side walls includes a bulging portion corresponding with an area around which the pipe is brazed to the closed chamber and an essentially straight portion at which brazing has not been performed. After the expanding, the lengthwise side walls respectively conform to the corresponding lengthwise walls of the fixture.

In a still further example of the first aspect, the bulging portion of each lengthwise side wall extends away from the straight portion of each lengthwise side wall and a center of the closed chamber.

In yet another example of the first aspect, walls of the closed chamber other than the deformed closed chamber walls include widthwise opposite side walls that respectively correspond with opposing widthwise walls of the stationary component.

In another example of the first aspect, when the fluid is injected into the closed chamber, the closed chamber is expanded such that portions of the lengthwise side walls that do not contact the fixture prior to the fluid being injected into the closed chamber are pressured outward from the center of the closed chamber to respectively contact the stationary component and the clamping component and remove the bulging portions from the lengthwise side walls.

In a further example of the first aspect, when the corresponding lengthwise walls of the fixture are essentially straight, the injecting of the fluid expands the bulging portions and the essentially straight portions of the lengthwise side walls until the lengthwise side walls have respectively conformed to the corresponding lengthwise walls of the fixture to be essentially straight.

In yet another of the first aspect, the joining includes brazing the pipe to the closed chamber hole circumference. The brazing includes applying heat to the pipe, the closed chamber hole circumference, and a filler material to melt the filler material and flowing the melted filler material between the pipe and the closed chamber hole circumference. The pipe outer surface and the closed chamber hole circumference is joined after cooling of the flowed filler material.

In a subsequent example of the first aspect, an outer surface of the pipe is brazed to the closed chamber hole circumference.

In a second aspect, a method of manufacturing a heat transfer plate including an opening for a complex heat pipe is provided. The method includes joining a pipe to a circumference of a hole of a closed chamber, positioning the closed chamber within a fixture after the joining, expanding deformed walls of the closed chamber to conform to walls of the fixture that correspond with the deformed closed chamber walls, removing the expanded closed chamber from the fixture, positioning the expanded closed chamber in the opening, and soldering the positioned closed chamber to edges defining the opening.

In an example of the second aspect, the top surface of the positioned closed chamber is essentially planar with a top surface of the plate.

In another example of the second aspect, the edges defining the opening include widthwise opposing opening edges and lengthwise opposing opening edges. The walls of the fixture include lengthwise opposing walls and widthwise opposing walls. The expanded closed chamber includes lengthwise opposite side walls corresponding with the lengthwise opening edges defining the opening and the lengthwise walls of the fixture and widthwise opposing side walls corresponding with the widthwise opening edges defining the opening and the widthwise walls of the fixture. Prior to the expanding, the deformed closed chamber walls include the lengthwise opposite side walls. The expanding includes injecting a fluid through an inlet of the pipe into the closed chamber until each of the deformed lengthwise side walls expands to conform to a corresponding one of the lengthwise walls of the fixture and a corresponding one of the lengthwise opening edges defining the opening.

In an additional example of the second aspect, a distance between the lengthwise opening edges is 0.005" to 0.010" greater than a distance between the lengthwise side walls of the expanded closed chamber. A distance between the widthwise opening edges is 0.005" to 0.010" greater than a distance between the widthwise side walls of the expanded closed chamber.

In a further example of the second aspect, prior to the expanding, each of the deformed lengthwise side walls includes a bulging portion corresponding with an area around which the pipe was brazed to the closed chamber and an essentially straight portion at which brazing has not been performed.

In yet another example of the second aspect, the joining includes brazing the pipe to the closed chamber hole circumference. The brazing includes applying heat to the pipe, the closed chamber hole circumference, and a filler material to melt the filler material and flowing the melted filler material between the pipe and the closed chamber hole circumference. The pipe outer surface and the closed chamber hole circumference is joined after cooling of the flowed filler material.

Other features and aspects may be apparent from the following detailed description, the drawings, and the claims.

### BRIEF DESCRIPTION OF THE DRAWINGS

FIG. 1 is a perspective view illustrating an example of a complex heat pipe.
FIG. 2 is a top view illustrating an example of a complex heat pipe after the joining of pipes to corresponding holes of a closed chamber.
FIG. 3 is a top plan view illustrating an example of a complex heat pipe loosely positioned in a fixture.
FIG. 4 is a sectional view taken along lines 4-4 of FIG. 3 illustrating an example of a complex heat pipe positioned in a fixture.
FIG. 5 is a top plan view illustrating an example of a complex heat pipe positioned in and clamped by a fixture.
FIG. 6 is a top plan view illustrating an example of a complex heat pipe positioned in a fixture and having lengthwise closed chamber walls undergoing expansion as fluid is being injected into the closed chamber.
FIG. 7 is a sectional view taken along lines 7-7 of FIG. 6 illustrating an example of a complex heat pipe that is positioned in a fixture and having lengthwise closed chamber walls undergoing expansion as fluid is being injected into the closed chamber.
FIG. 8 is a top view illustrating an example of a heat transfer plate including an opening in which a complex heat pipe is positioned.
FIG. 9 is a sectional view taken along lines 9-9 of FIG. 8 illustrating an example of a heat transfer plate that includes an opening in which a complex heat pipe is positioned.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

Examples incorporating one or more embodiments are described and illustrated in the drawings. These illustrated examples are not intended to be limiting. For example, one or more aspects of an embodiment may be utilized in other embodiments and even other types of devices.

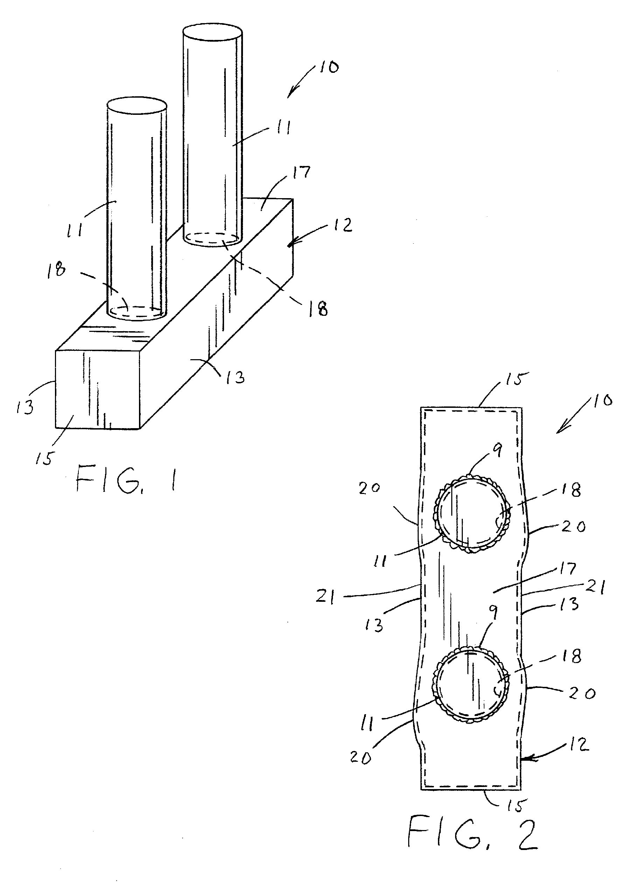

FIG. 1 is a perspective view illustrating an example of a complex heat pipe 10. FIG. 2 is a top view illustrating an example of the complex heat pipe 10 after the joining of pipes 11 to circumferences of corresponding holes 18 in a closed chamber 12. The closed chamber 12 described herein is a copper rectangular cuboid with lengthwise opposite side walls 13 defining the length of the cuboid and widthwise opposite side walls 15 defining the width of the cuboid.

While the closed chamber 12 is described as a rectangular cuboid, embodiments disclosed herein are not limited thereto. For example, the closed chamber 12 may be any number of different shapes, such as a cylinder, that would enable one having ordinary skill in the art to incorporate the closed chamber 12 into a functioning complex heat pipe 10.

A top surface 17 of the closed chamber 12 includes the holes 18 to which the pipes 11 are joined. The top surface 17 may be planar with other corresponding surfaces positioned adjacent thereto. A bottom surface of the closed chamber 12 may generally rest flush on opposing surfaces.

While the pipes 11 illustrated herein are cylindrical, embodiments described herein are not limited thereto. For example, pipes 11 could have a square cross-section if functionally effective within the constraints of the heat transfer application. Moreover, the closed chamber holes 18 could be provided to correspond to the square cross-section of the pipes 11.

Further, while the closed chamber 12 described herein is copper, embodiments described herein are not limited thereto. For example, the closed chamber 12 may be constructed of any material known to one having ordinary skill in the art to have similar bonding and deformation properties under application of heat as the copper closed chamber 12 described herein, including other applicable metal materials. Moreover, a plastic chamber may be used as an alternative to a metal chamber. However, the joining of a plastic chamber to the pipes and the heat transfer plate disclosed herein may require the use of methods other than brazing and soldering, respectively.

In addition, while there are two pipes 11 illustrated as being fixed in corresponding holes 18 of the closed chamber 12, embodiments described herein are not limited thereto. For example, the number of pipes 11 incorporated into the closed chamber 12 may vary based on application. As a result, the number of holes 18 in the closed chamber 12 may vary with the number of pipes 11 required for the application.

The respective joining of the pipes 11 to circumferences of holes 18 provided in the closed chamber 12 may be accomplished through the brazing of outer surfaces of the pipes 11 to the respective closed chamber hole circumferences 18. The brazing process requires application of heat to the pipe 11, the hole 18, and a filler material 9. The heating melts the filler material 9 and causes the melted filler material 9 to flow between the items to be joined. After the heating ceases and the flowing filler material 9 cools, the respective coupling of the pipes 11 to the circumferences of the holes 18 is complete.

As is illustrated in FIG. 2, the brazing process causes macroscopic deformations in the lengthwise side walls 13 of the thin-walled closed chamber 12. For purposes of this disclosure, these deformations are referred to as bulging portions 20. The bulging portions 20 formed on the lengthwise side walls 13 protrude and extend away from essentially straight portions 21 of the lengthwise side walls 13 and a center of the closed chamber 12.

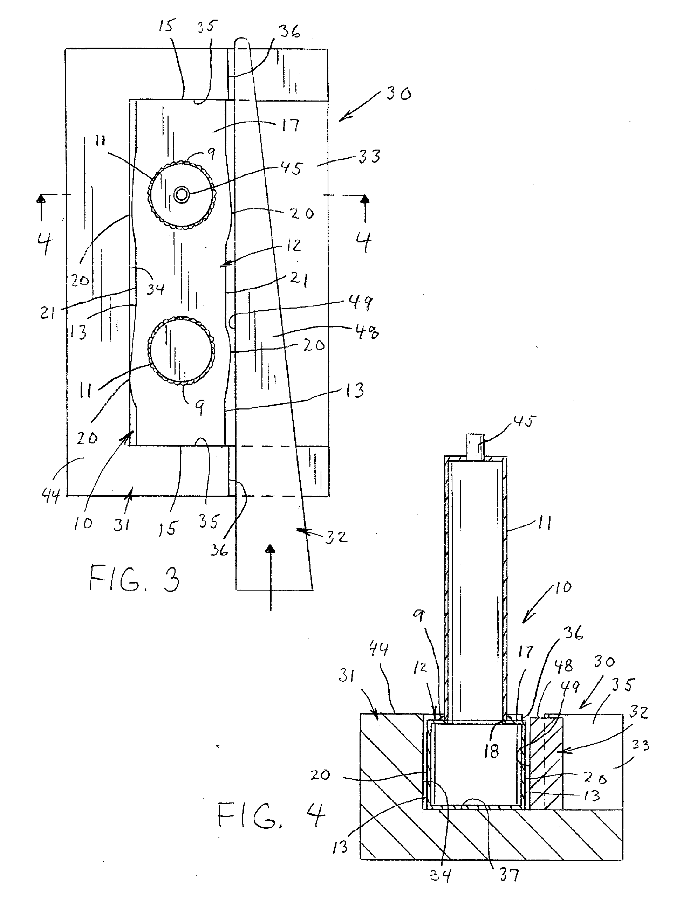

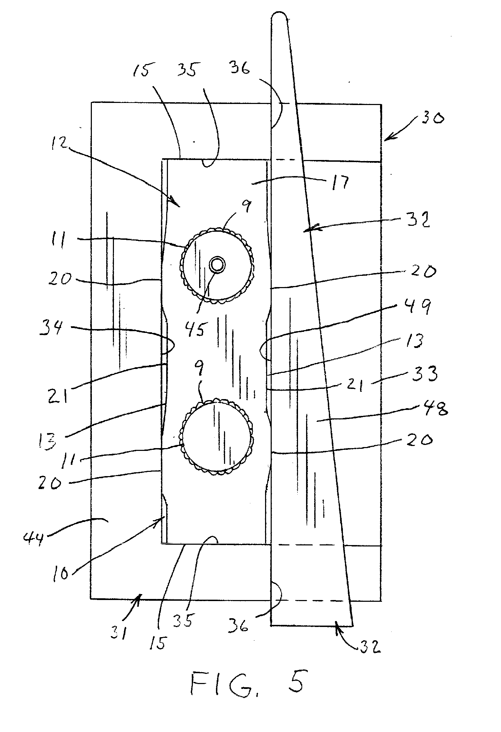

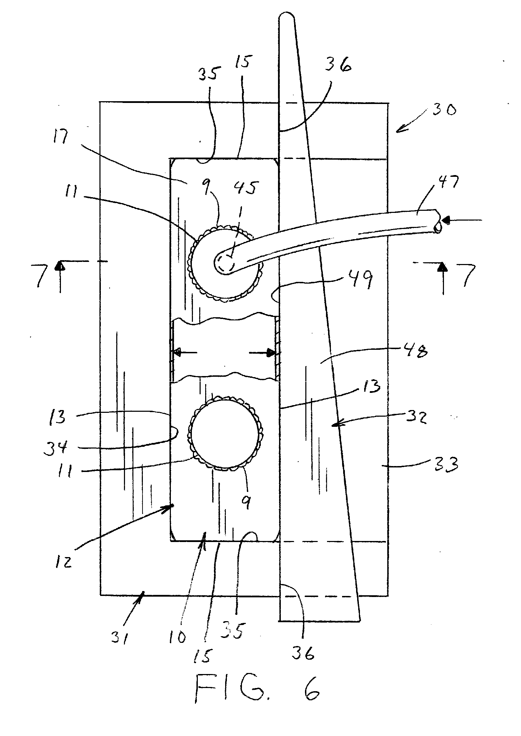

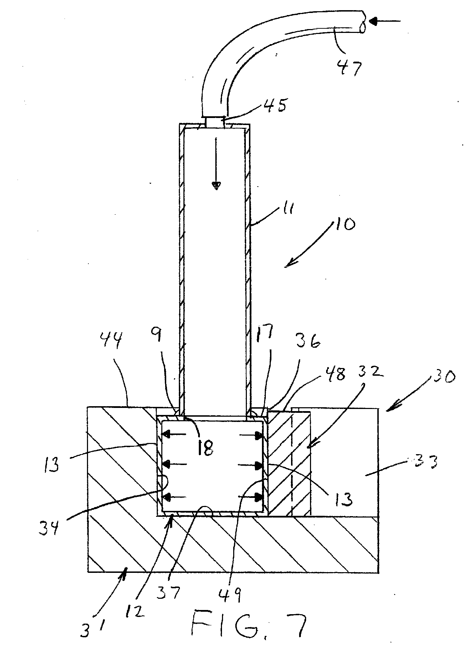

FIG. 3 is a top plan view illustrating an example of the complex heat pipe 10 loosely positioned in a fixture 30. FIG. 4 is a sectional view taken along lines 4-4 of FIG. 3 illustrating an example of the complex heat pipe 10 positioned in the fixture 30. FIG. 5 is a top plan view illustrating an example of the complex heat pipe 10 positioned in and clamped by the fixture 30. FIG. 6 is a top plan view illustrating an example of the complex heat pipe 10 positioned in the fixture 30 and having the lengthwise side walls 13 undergoing expansion as fluid is being injected into the closed chamber 12. FIG. 7 is a sectional view taken along lines 7-7 of FIG. 6 illustrating an example of the complex heat pipe 10 that is positioned in the fixture 30 and having lengthwise side walls 13 undergoing expansion as fluid is being injected into the closed chamber 12.

As is illustrated in the example shown in FIGS. 3-6, the deformed closed chamber 12 can be positioned within the fixture 30 in spite of the aforementioned bulging portions 20. The fixture 30 may be a clamping tool essentially defined by a stationary component 31 and a clamping component 32. The pipes 11 may be protected with an external structure or a series of aluminum thin plates (not shown) that will act as fins for a heat sink.

The stationary component 31 has one lengthwise wall 34, two opposing widthwise walls 35, and an open-sided area 33. The two widthwise walls 35 are designed to accommodate a length of the closed chamber 12 from one widthwise side wall 15 to another. The respective lengthwise gaps between the two widthwise walls 35 and the two widthwise side walls 15 are minimal so that expansion of the lengthwise side walls 13 within the fixture 30 can be encouraged. In other words, no expansion takes place at the widthwise side walls 15 of the closed chamber 12. In an example, the length between the two widthwise walls 35 of the stationary component 31 may be slightly greater than the length between the two widthwise side walls 15 of the closed chamber 12.

The top surface 17 of the deformed closed chamber 12 is positioned to be essentially planar to a top surface 44 of the stationary component 31 and a top surface 48 of the clamping component 32. The open-sided area 33 of the stationary component 31 allows arrangement of the deformed closed chamber 12 in the fixture 30 without difficulty or restraint as to the varying widths caused by the bulging portions 20 of the closed chamber 12. Even so, a width of the deformed closed chamber 12 across any length thereof may be less than a length of the widthwise walls 35 of the stationary portion 31. Thus, when finally positioned within the fixture 30, the deformed closed chamber 12 may extend into the open-sided area 33 of the stationary component 31. The bottom surface of the closed chamber 12 generally rests flush on a recessed surface 37 of the open-sided area 33.

When the deformed closed chamber 12 has been positioned in the fixture 30, the clamping component 32 can be moved toward the lengthwise side wall 13 positioned furthest from the lengthwise wall 34 of the stationary component 31, thereby serving to enclose an area of the deformed closed chamber 12 within the fixture 30. In this state, the only surface of the deformed closed chamber 12 that is not enclosed in some way by the fixture 30 is the top surface 17 of the closed chamber 12 from which the pipes 11 extend.

As is illustrated in FIG. 5, the clamping component 32 may have a clamping wall 49. The clamping wall 49 may be positioned essentially flush against front walls 36 of the stationary component 31, which are respectively adjacent to the widthwise walls 35 of the stationary component 31. When the clamping component 32 is positioned as such, the clamping wall 49 may be in contact with the bulging portions 20. In this case, the clamping wall 49 additionally defines a lengthwise wall of the fixture 30. Further, when the clamping component 32 is positioned as such, the bulging portions 20 may be in contact with the lengthwise wall 34 of the stationary component 31. In an example, the closed chamber 12 may be inhibited from movement when the clamping wall 49 of the clamping component 32 is flush against the front walls 36 of the stationary component 31.

While the clamping component 32 is illustrated as having a shape similar to that of a wedge, embodiments described herein are not limited thereto. For example, the clamping component 32 may be shaped in any way that would facilitate clamping of the closed chamber 12 within the stationary component 31, including, but not limited to, a cuboid, a block, a wall, or any other similar structure known to one having ordinary skill in the art.

In addition, the bulging portion 20 of the closed chamber 12 may be compacted when the clamping component 32 is flush against the front walls 36 of the stationary component 31. This is illustrated by comparing the bulging portions 20 shown in FIG. 3 and the bulging portions 20 shown in FIG. 5. In FIG. 3, the clamping component 32 is not flush against the front walls 36 of the stationary component 31. As a result, the bulging portions 20 are not affected. However, in contrast, FIG. 5 shows the clamping component 32 to be flush against the front walls 36 of the stationary component 31. The flush positioning of the clamping component 32 forces the shapes of the bulging portions 20 to be flattened against both the clamping component 32 and the stationary component 31.

While FIG. 5 illustrates the all of the bulging portions 20 to be flattened against both the clamping component 32 and the stationary component 31, embodiments disclosed herein are not limited thereto. For example, one or more of the bulging portions 20 could have an orientation in which no contact is made between one or both of the clamping component 32 and the stationary component 31 while the closed chamber 12 is still deformed.

The fixture 30 is sufficiently rigid to allow further deformation of the closed chamber 12 while simultaneously ensuring dimensional control of the lengthwise side walls 13 within the fixture 30 when the closed chamber 12 is placed under certain conditions. After securing the deformed closed chamber 12 within the fixture 30, to straighten the lengthwise side walls 13 to correspond to the bulging portions 20 of the deformed closed chamber 12, fluid may be injected into inner portions of the closed chamber 12. The fluid serves to pressure and expand the lengthwise side walls 13 into further deformations that conform to and are consistent with the lengthwise wall 34 of the stationary component 31 and the clamping wall 49 of the clamping component 32. Moreover, the essentially straight portions 21 of the lengthwise side walls 13 have been expanded to correspond to a position of the bulging portion 20 of the lengthwise side walls 13. As a result, the lengthwise side walls 13 can be made essentially straight.

For example, when the fluid is injected into the deformed closed chamber 12, the closed chamber 12 is expanded such that portions of the lengthwise side walls 13 that do not contact the fixture 30 prior to the fluid being injected into the closed chamber 12 may be pressured outward from the center of the closed chamber 12 to respectively contact the stationary component 31 and the clamping component 32, thereby assuming a lateral positioning essentially corresponding to that of the bulging portions 20. In other words, when the lengthwise wall 34 of the stationary component 31 and the clamping wall 49 of the clamping component 32 are essentially straight, the deformations that occur as a result of the fluid injection may be manifested in an expansion of the bulging portions 20 and the straight portions 21 until the lengthwise side walls 13 are essentially straight.

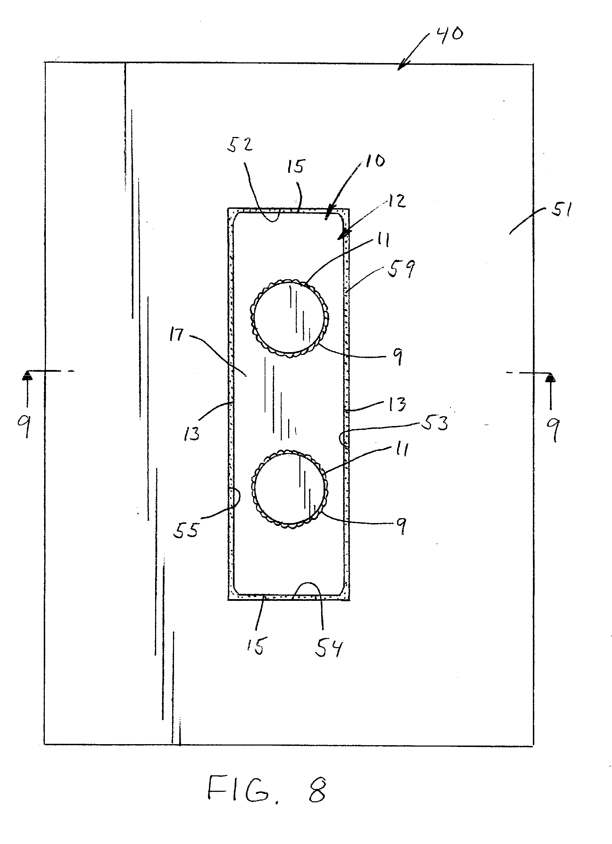

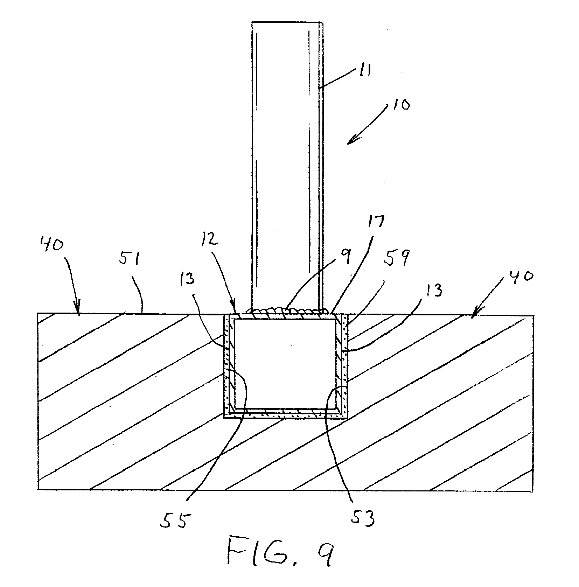

During the fluid injection, because of the fixture 30, the width of the closed chamber 12 between the lengthwise side walls 13 of the closed chamber 12 is controlled. Further, the length of the closed chamber 12 between the widthwise side walls 15 should not change as the length of the widthwise walls 35 of the stationary component 31 will inhibit any undesired expansion. The fixture 30 serves to control and adjust the dimensions of the closed chamber 12 so that there is an approved gap between the closed chamber 12 of the complex heat pipe 10 and an opening defined by edges 52, 53, 54, 55 in the heat transfer plate 40, an example of which is illustrated in FIGS. 8 and 9.

As illustrated in FIGS. 4-7, an inlet 45 may be provided in one or more of the pipes 11. The fluid may be injected into the closed chamber 12 via the inlet 45 and the pipe 11. The fluid injected therein may be an inert gas, but is not limited thereto. A tube 47 can be connected to the inlet 45 in order to transport the fluid from a source (not shown) to the inlet 47. While this process is illustrated herein as an example method by which fluid can be injected into the closed chamber 12 for expansion of the lengthwise side walls 13 of the closed chamber 12, embodiments disclosed herein are not limited thereto. After the straightening of the lengthwise side walls 13, the clamping component 32 is moved away from the closed chamber 12, thereby permitting the complex heat pipe 10 to be easily removed from the fixture 30.

FIG. 8 is a top view illustrating an example of the heat transfer plate 40 including an opening in which the complex heat pipe 10 is positioned. FIG. 9 is a sectional view taken along lines 9-9 of FIG. 8 illustrating an example of the heat transfer plate 40 that includes an opening in which a complex heat pipe 10 is positioned.

In the examples illustrated in FIGS. 8 and 9, the straightened closed chamber 12 is positioned within the opening in the heat transfer plate 40 so that the closed chamber 12 can be soldered to the heat transfer plate 40 within the opening. The shape of the opening is defined by edges 52, 53, 54, 55 of the plate 40. As is illustrated, solder 59 is used to secure the side walls 13 and 15 of the closed chamber 12 to the respective edges 53, 55 and 52, 54 of the plate 40. A length of the opening is defined by a distance between the widthwise opening edge 52 and the widthwise opening edge 54. A width of the opening is defined by a distance between the lengthwise opening edge 53 and the lengthwise opening edge 55. The width and the length of the opening should be 0.005-0.010" greater than the width and the length of the closed chamber 12. These distances may provide for an application of an optimal soldering thickness to ensure good wetting and no voids in the connection between the closed chamber 12 and the heat transfer plate 40. The opening in the plate 40 is deep enough for the top surface 17 of the closed chamber 12 to be planar with the plate surface 51.

Further, special adjustments can be made to the opening in the plate 40 to inhibit hot exhaust gases from being trapped therein. For example, a set of vertical grooves (not illustrated) can be provided within the plate 40 at set distances along the length of the opening to channel the gases away. As result, physical contact between the complex heat pipe 10 and the plate 40 may be improved, thereby allowing electronic device into which the plate 40 is applied to operate higher loads.

A number of examples have been described above. Nevertheless, it will be understood that various modifications may be made. For example, suitable results may be achieved if the described elements are combined in a different manner and/or replaced or supplemented by other elements or their equivalents. Accordingly, other implementations are within the scope of the following claims.

## Claims

1. A method of manufacturing a complex heat pipe, comprising:
joining a pipe to a circumference of a hole of a closed chamber;
positioning the closed chamber within a fixture after the joining; and
expanding deformed walls of the closed chamber to conform to walls of the fixture that correspond with the deformed closed chamber walls.

2. The method according to claim 1, wherein the closed chamber is positioned within the fixture such that a bottom surface of the closed chamber is flush with a bottom wall of the fixture.

3. The method according to claim 1 or 2, wherein the expanding comprises injecting a fluid through an inlet of the pipe into the closed chamber until the deformed closed chamber walls expand to conform to the corresponding walls of the fixture.

4. The method according to claim 3, wherein the positioning comprises arranging the closed chamber between a stationary component of the fixture and a clamping component of the fixture,
wherein the stationary component and the clamping component define the walls of the fixture, and
wherein the clamping component is movable to enclose and clamp the closed chamber within the fixture.

5. The method according to claim 4, wherein the expanded closed chamber walls conform to walls of the stationary component and the clamping component of the fixture that define the corresponding walls of the fixture.

6. The method according to any one of the previous claims, wherein the deformed closed chamber walls comprise lengthwise opposite side walls,
wherein the corresponding walls of the fixture comprise lengthwise walls corresponding with the lengthwise side walls of the closed chamber,
wherein, prior to the expanding, each of the lengthwise side walls comprises a bulging portion corresponding with an area around which the pipe is brazed to the closed chamber and an essentially straight portion at which brazing has not been performed,
wherein, after the expanding, the lengthwise side walls respectively conform to the corresponding lengthwise walls of the fixture.

7. The method according to claim 6, wherein the bulging portion of each lengthwise side wall extends away from the straight portion of each lengthwise side wall and a center of the closed chamber.

8. The method according to claim 6 or 7, wherein walls of the closed chamber other than the deformed closed chamber walls comprise widthwise opposite side walls that respectively correspond with opposing widthwise walls of the stationary component.

9. The method according to claim 7, wherein the expanding comprises injecting a fluid through an inlet of the pipe into the closed chamber until the deformed closed chamber walls expand to conform to the corresponding walls of the fixture, and
wherein, when the fluid is injected into the closed chamber, the closed chamber is expanded such that portions of the lengthwise side walls that do not contact the fixture prior to the fluid being injected into the closed chamber are pressured outward from the center of the closed chamber to respectively contact the stationary component and the clamping component and remove the bulging portions from the lengthwise side walls.

10. The method according to claim 6, wherein the expanding comprises injecting a fluid through an inlet of the pipe into the closed chamber until the deformed closed chamber walls expand to conform to the corresponding walls of the fixture, and,
wherein, when the corresponding lengthwise walls of the fixture are essentially straight, the injecting of the fluid expands the bulging portions and the essentially straight portions of the lengthwise side walls until the lengthwise side walls have respectively conformed to the corresponding lengthwise walls of the fixture to be essentially straight.

11. The method according to any one of the previous claims, wherein the joining comprises brazing the pipe to the closed chamber hole circumference,
wherein the brazing comprises applying heat to the pipe, the closed chamber hole circumference, and a filler material to melt the filler material and flowing the melted filler material between the pipe and the closed chamber hole circumference, and
wherein the pipe and the closed chamber hole circumference are joined after cooling of the flowed filler material.

12. The method according to any one of the previous claims, wherein an outer surface of the pipe is brazed to the closed chamber hole circumference.

13. A method of manufacturing a heat transfer plate and complex heat pipe assembly including a heat transfer plate comprising an opening for a complex heat pipe, the method comprising the method of manufacturing a complex heat pipe of any one of the previous claims, the method further comprising:
removing the expanded closed chamber from the fixture;
positioning the expanded closed chamber in the opening; and
soldering the positioned closed chamber to edges defining the opening.

14. The method according to claim 13, wherein the top surface of the positioned closed chamber is essentially planar with a top surface of the plate.

15. The method according to claim 13 or 14, wherein the edges defining the opening comprise lengthwise opposing opening edges and widthwise opposing opening edges,
wherein the walls of the fixture comprise lengthwise opposing walls and widthwise opposing walls,
wherein the expanded closed chamber comprises lengthwise opposite side walls corresponding with the lengthwise opening edges defining the opening and the lengthwise walls of the fixture and widthwise opposing side walls corresponding with the widthwise opening edges defining the opening and the widthwise walls of the fixture,
wherein, prior to the expanding, the deformed closed chamber walls comprise the lengthwise opposite side walls, and
wherein the expanding comprises injecting a fluid through an inlet of the pipe into the closed chamber until each of the deformed lengthwise side walls expands to conform to a corresponding one of the lengthwise walls of the fixture and a corresponding one of the lengthwise opening edges defining the opening.

16. The method according to claim 15, wherein a distance between the lengthwise opening edges is 0.005" to 0.010" greater than a distance between the lengthwise side walls of the expanded closed chamber, and
wherein a distance between the widthwise opening edges is 0.005" to 0.010" greater than a distance between the widthwise side walls of the expanded closed chamber.

17. The method according to claim 15 or 16, wherein, prior to the expanding, each of the deformed lengthwise side walls comprises a bulging portion corresponding with an area around which the pipe was brazed to the closed chamber and an essentially straight portion at which brazing has not been performed.
